# EUROPEAN PATENT SPECIFICATION

(11) **EP 0 937 633 B1**
(45) Date of publication and mention of the grant of the patent: **28.05.2003**
(21) Application number: 99103036.2
(22) Date of filing: 16.02.1999
(51) Int. Cl.: B62D 35/00, F16D 65/847, B60T 5/00

(54) **An improvement to devices for reducing drag in vehicles**
Eine Verbesserung zu Vorrichtungen für Widerstandsverringerung in Fahrzeugen
Une amélioration aux dispositifs de réduction de la résistance dans des véhicules

(30) Priority: 18.02.1998 IT TO980130
(43) Date of publication of application: 25.08.1999
(73) Proprietor: POLITECNICO DI TORINO, DIPARTIMENTO DI ENERGETICA, 10129 Torino (IT); FIAT AUTO S.p.A., 10135 Torino (IT)
(72) Inventor: Morelli, Alberto, 10131 Torino (IT); Tonoli, Andrea, 10051 Avigliana (Torino) (IT); Di Giusto, Nevio, 10135 Torino (IT); Bonis, Bruno, 10156 Torino (IT)
(74) Representative: Serra, Francesco

(56) References cited:
- DE-A- 3 135 688
- DE-A- 3 903 361
- DE-A- 4 114 761
- DE-A- 4 342 138
- FR-A- 2 506 415

## Description

The present invention relates to an improvement to devices for reducing drag in vehicles.

More precisely, the invention relates to devices for reducing drag in vehicles of the type according to the preamble of claim 1, as described in prior European patent application published under No. EP-A-0 738 650 and hereinafter referred to in short as known devices. These known devices comprise, basically, ventilating means associated with each wheel of the vehicle for creating respective auxiliary flows and directing means associated with the wheel housing for directing the auxiliary flows, by means of a manifold having a respective outlet, so that they pass along the bottom of the vehicle and emerge in the region of the cut-off tail of the vehicle in order at least partially to create a so-called fluid tail.

If care is taken to establish similar velocity and pressure conditions around the entire perimeter of the cut-off rear portion of the vehicle, it is thus possible to generate a ring vortex which is stationary relative to the vehicle; this vortex induces in the external flow a convergence similar to that which would occur if the (solid) tail of the vehicle were not cut off.

The benefits achieved by this device are represented by a considerable reduction in the drag coefficient Cx of the vehicle. It has, however, been found that a further improvement in the aerodynamic performance of the known device can be achieved by preventing the dispersal of the portion of the auxiliary flows generated by the ventilation means associated with the wheels which is not caught by the respective wheel housings.

The improvement according to the present invention is directed essentially towards achieving better control of the auxiliary flows, preventing their partial dispersal and thus considerably increasing the overall aerodynamic performance of the device.

A further object of the invention is to improve the efficiency of the ventilating means associated with the wheels as well as improving the cooling effect which these ventilating means perform on the braking members which are also associated with the wheels.

A further object of the invention is to achieve a structural simplification of the wheel and of the ventilating means associated therewith, in order both to facilitate their mass production and to reduce manufacturing costs.

According to the present invention the aforementioned important objects and others which will become clear from the following detailed description are achieved by an improved device having the specific characteristics of the following claims.

Basically, according to the invention, the distribution of the aforesaid auxiliary flows is substantially better as a result of the improvement which consists in providing each wheel with a fixed screen, restrained on the suspension members and situated on the inner side of the wheel, of which it screens the entire lower portion disposed below the hub, excluding the tyre, in order to direct the auxiliary flow upwardly towards air intakes provided on the wheel housing, to force the whole of the auxiliary flow to pass over the braking means associated with the wheel, and to act as a fairing for the lower portion of the inner face of the wheel which is struck by the flow passing along the bottom of the vehicle.

Moreover, according to the present invention, the ventilating means associated with each wheel are constituted by radial channels with cross-sections substantially similar to a Greek key pattern, formed by pressing in the wheel disc and defined, on the outer side of the wheel, by a removable lenticular outer wheel trim and, on the inner side, by a metal plate restrained irremovably on the wheel disc, typically by spot welds.

The characteristics, objects and advantages of the improved device according to the present invention will become clear from the following detailed description, given with reference to the appended drawings, provided by way of non-limiting example, in which:
Figure 1 is a meridian section of a wheel with a respective wheel housing provided with the improved device according to the invention,
Figure 2 is a staggered section taken on the line II-II of Figure 1,
Figure 3 is a section taken on the line III-III of Figure 2,
Figure 4 is a detail of the wheel of Figure 1, on an enlarged scale,
Figure 5 is a partial front elevational view of the wheel, without the outer wheel trim.

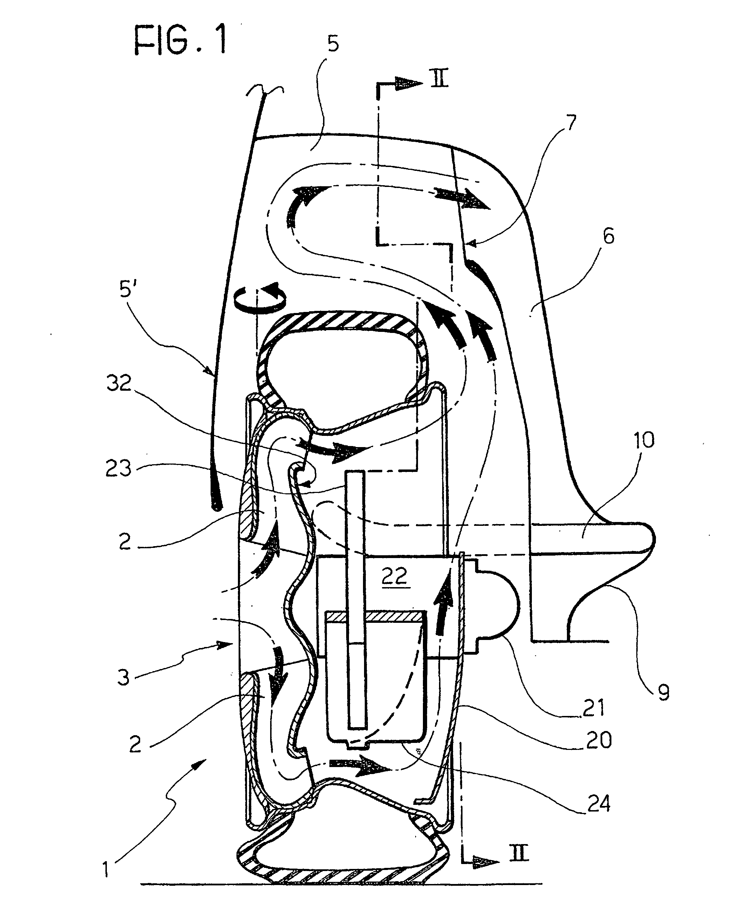

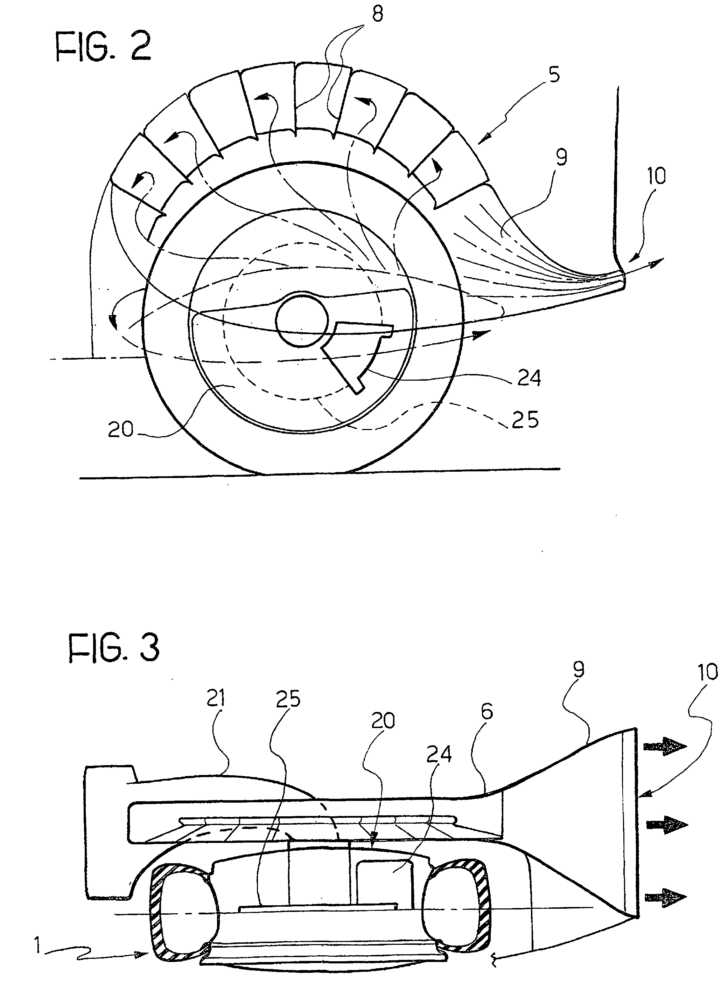

With reference initially to Figures 1 to 3, a motor- vehicle wheel, indicated 1, is provided, in known manner, with vanes 2, preferably arranged radially, which can generate an auxiliary air-flow picked up from the exterior by means of a central air intake 3 and can cause the flow to behave as indicated by the arrows in the drawing, by directing it through holes, which will be referred to further below, into a wheel housing 5. In the wheel housing 5 there is a space in which there is a plurality of ducts 6 having respective inlets 7 which catch the auxiliary flow created by the wheel and straighten it by means of fixed vaning 8 defining the ducts. The straightened flow, which thus has no transverse velocity components, is admitted to a manifold 9 having an outlet 10 with a flat cross-section having a horizontal major axis, and is directed so as to pass along the bottom of the vehicle and to emerge in the region of the cut-off tail of the vehicle.

According to the present invention, to prevent some of the auxiliary flow generated by the set of vanes 2 from being dispersed in the space in the wheel trim, escaping downwardly to the detriment of the flow directed to the inlet openings 7, each wheel 1 has a fixed screen 20 with a semi- lenticular profile, restrained on the suspension members, typically on the end of the suspension arm 21, and situated on the inner side of the wheel of which it screens the lower portion disposed below the hub 22, except for the tyre. In addition to the function of directing the entire flow generated by the set of vanes 2, the screen 20 also has the function of forcing the air-flow to pass over the braking members which it covers and protects; in the embodiment shown, these members are constituted by a disc 23 and by the respective caliper 24. The screen 20 also performs the function of a lenticular fairing for the lower portion of the inner face of the wheel which is the only one which is struck by the flow passing along the bottom of the vehicle.

Preferably, according to the invention and in order further to reduce the loss of even small portions of the auxiliary flow, the rear wheel housings 5 are in turn partially shut off on the outer side by screening 5' which substantially covers the upper outer portion of the wheel 1 but stops above the air intake 3 both in order not to interfere with the air intake and to facilitate removal of the wheel 1.

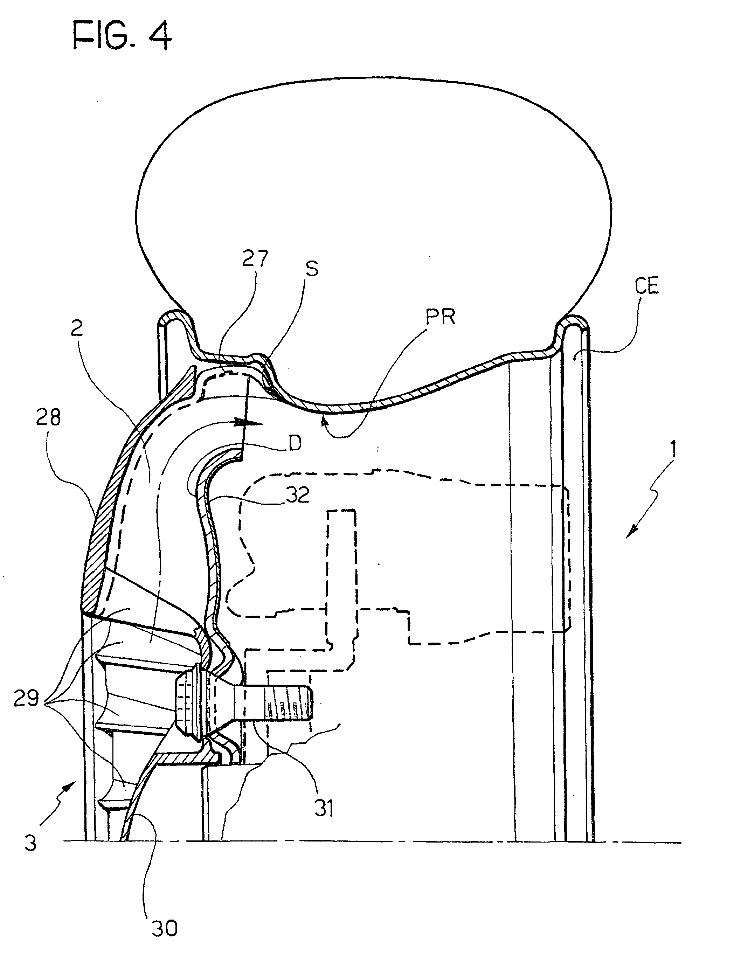

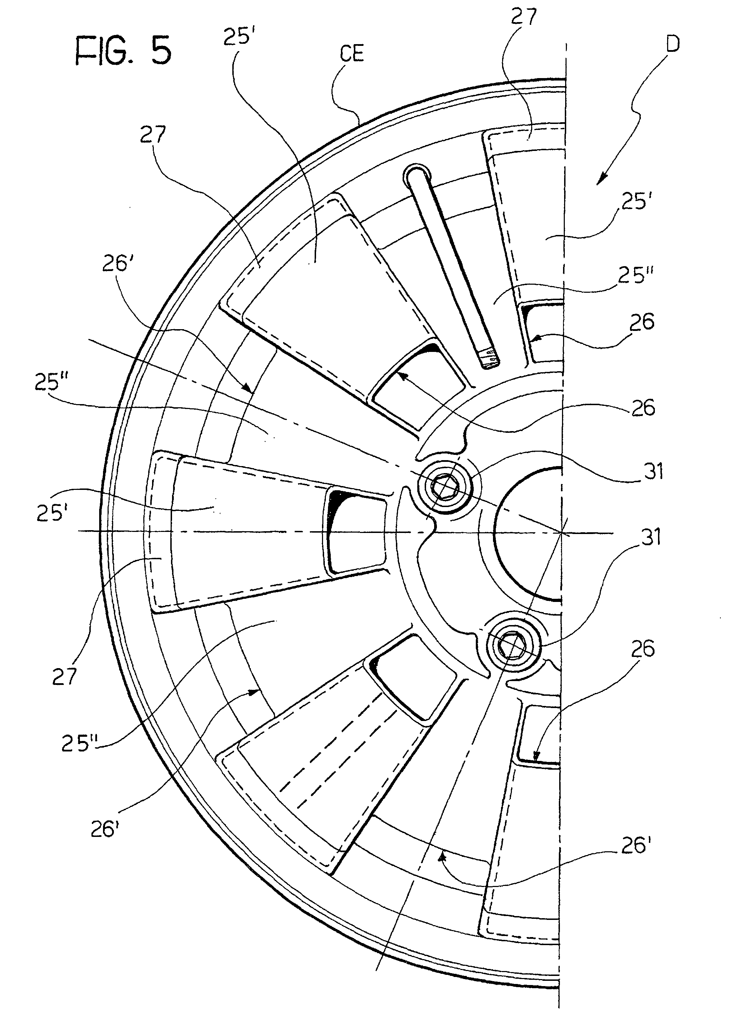

The latter is advantageously constructed as shown in detail in Figures 4 and 5, in which it can be seen that the set of vanes 2 is constituted by radial channels with cross-sections substantially similar to a Greek key pattern, formed in the wheel disc D by pressing and constituted by raised trapezoidal ribs 25' of predetermined angular amplitude spaced by disc portions 25" of equal angular amplitude. The raised ribs 25' have apertures 26 for the passage of the air in the region of their bases and terminate at the opposite end in respective upper curved portions 27 serving for the connection of the disc D to the rim CE of the wheel by welds S (Figure 4). The disc portions 25" in turn have openings 26' for the passage of the air in the opposite ends to the hub and, in the region of the openings, the rim CE has a connecting throat profile PR which favours the spread of the auxiliary flow on the inner side of the wheel.

The radial channels of the wheel are defined, on the outer side of the wheel, by a removable wheel trim 28 of suitable lenticular shape. In the region of the central air intake 3, this trim has leading edges 29 for the set of blades 2, the leading edges and a central hub cap 30 being carried integrally by the trim which is restrained on the wheel disc D by means of bolts 31 which fix the wheel to the hub.

In order for the left-hand and right-hand wheel trims not to differ, the leading edges 29 have profiles which are symmetrical with respect to their median planes, with a considerable radius of curvature.

On the inner side of the wheel, the radial channels are defined by a metal plate 32 (Figure 4) which is associated with the disc D and is restrained irremovably thereon, typically by spot welds.

## Claims

1. A device for reducing drag in vehicles, comprising ventilating means (2) associated with each wheel (1) of the vehicle for creating respective auxiliary air-flows and directing means associated with the wheel housing (5) for directing the auxiliary air-flows, by means of a manifold having an outlet, so that they pass along the bottom of the vehicle, **characterized in that** it further comprises, associated with each wheel (1), a fixed screen (20) restrained on the suspension members (21) and situated on the inner side of the wheel, of which it screens the entire lower portion disposed below the hub (22), excluding the tyre, in order to direct the auxiliary air-flow towards the directing means (6, 7 and 8) associated with the wheel housing (5), to force the whole of the flow to pass over the braking members (23-24) associated with the wheel (1), and to act as a fairing for the lower portion of the wheel.

2. A device according to Claim 1, **characterized in that** the fixed screen (20) has a substantially semi-lenticular profile.

3. A device according to Claims 1 and 2, **characterized in that** the fixed screen (20) covers and protects the braking members (23-24) associated with the wheel (1).

4. A device according to Claim 1, **characterized in that** the rear wheel housings (5) are partially shut off on their outer sides by a screen (5') which substantially covers the upper portion of the wheel.

5. A device according to Claim 1, **characterized in that** the ventilating means (2) associated with each wheel (1) are in the form of radial channels with cross-sections substantially similar to a Greek key pattern, formed in the wheel disc (D) by pressing and constituted by raised trapezoidal ribs (25') of predetermined angular amplitude spaced by disc portions (25") of equal angular amplitude.

6. A device according to Claims 1 and 5, **characterized in that** the raised ribs (25') have openings (26) for the passage of the air in the region of their bases adjacent the hub and terminate at the opposite end in respective upper curved portions (27) serving for the connection of the wheel disc (D) to the rim (CE) by welding (S).

7. A device according to Claims 1, 5 and 6, **characterized in that** the disc portions (25") spacing the raised ribs (25') have openings (26') for the passage of the air at the opposite ends to the hub, and **in that** the rim (CE) has, in the region of the openings, a connecting profile (PR) for favouring the spread of the auxiliary flow on the inner side of the wheel.

8. A device according to Claims 1, 5, 6 and 7, **characterized in that** the radial channels of the wheel (1) are defined, on the outer side of the wheel, by a removable wheel trim (28) and, on the inner side of the wheel, by a metal plate (32) which is associated with the wheel disc (D) and is restrained irremovably thereon.

9. A device according to Claim 8, **characterized in that** the wheel trim (28) is of lenticular shape and, in the region of the central intake (3), has leading edges (29) for the set of vanes (2), the leading edges having profiles which are symmetrical with respect to a median plane, and the wheel trim (28) carrying a central hub cap (30) integral with the leading edges, the wheel trim being restrained on the wheel disc (D) by means of bolts (31) which fix the wheel to the hub.

## Patentansprüche

1. Vorrichtung zum Herabsetzen des Luftwiderstands in Fahrzeugen, wobei die Vorrichtung eine Belüftungseinrichtung (2), die jedem Rad (1) des Fahrzeugs zugeordnet ist, um entsprechende Hilfsluftströmungen zu erzeugen, sowie eine Leiteinrichtung enthält, die dem Radkasten (5) zugeordnet ist, um die Hilfsluftströmungen über ein Sammelrohr, das einen Auslass besitzt, so zu leiten, dass sie längs des Bodens des Fahrzeugs strömen, **dadurch gekennzeichnet, dass** die Vorrichtung weiters einen jedem Rad (1) zugeordneten ortsfesten Schirm (20) enthält, der auf den Elementen der Aufhängung (21) eingespannt und an der Innenseite des Rades angeordnet ist, bei dem er den gesamten unteren Teil, der unterhalb der Nabe (22) liegt, mit Ausnahme des Reifens abschirmt, um die Hilfsluftströmung zur Leiteinrichtung (6, 7 und 8) zu richten, die dem Radkasten (5) zugeordnet ist, um die gesamte Strömung zwangsweise über die Elemente der Bremse (23-24) zu führen, die dem Rad (1) zugeordnet sind, wobei er auch als Verkleidung für den unteren Teil des Rades dient.

2. Vorrichtung gemäß Anspruch 1, **dadurch gekennzeichnet, dass** der ortsfeste Schirm (20) ein im Wesentlichen halblinsenförmiges Profil besitzt.

3. Vorrichtung gemäß Anspruch 1 und 2, **dadurch gekennzeichnet, dass** der ortsfeste Schirm (20) die Elemente der Bremse (23-24), die dem Rad (1) zugeordnet sind, abdeckt und schützt.

4. Vorrichtung gemäß Anspruch 1, **dadurch gekennzeichnet, dass** die hinteren Radkästen (5) an ihren Außenseiten teilweise mit einer Abdeckung (5') verschlossen sind, die im Wesentlichen den oberen Teil des Rades abdeckt.

5. Vorrichtung gemäß Anspruch 1, **dadurch gekennzeichnet, dass** die Belüflungseinrichtung (2), die jedem Rad (1) zugeordnet ist, die Form von radialen Kanälen mit Querschnitten besitzt, die im Wesentlichen eine Mäanderlinie ähnlich sind, die in die Radscheibe (D) eingepresst wird und von erhabenen, trapezförmigen Rippen (25') mit vorgegebener Winkelamplitude gebildet wird, zwischen denen Scheibenteile (25") mit gleicher Winkelamplitude liegen.

6. Vorrichtung gemäß Anspruch 1 und 5, **dadurch gekennzeichnet, dass** die erhabenen Rippen (25') im Bereich ihrer Basis neben der Nabe mit Öffnungen (26) versehen sind, um die Luft durchströmen zu lassen, wobei sie am gegenüber liegenden Ende in entsprechenden nach oben gekrümmten Teilen (27) enden, die dazu dienen, um die Radscheibe (D) mit dem Rand (CE) durch Schweißstellen (S) zu verbinden.

7. Vorrichtung gemäß Anspruch 1, 5 und 6, **dadurch gekennzeichnet, dass** die Scheibenteile (25"), die zwischen den erhabenen Rippen (25') liegen, an den der Nabe gegenüber liegenden Enden mit Öffnungen (26') versehen sind, um die Luft durchströmen zu lassen, und dass der Rand (CE) im Bereich der Öffnungen ein Verbindungsprofil (PR) besitzt, um die Verteilung der Hilfsströmung auf der Innenseite des Rads zu unterstützen.

8. Vorrichtung gemäß Anspruch 1, 5, 6 und 7, **dadurch gekennzeichnet, dass** die radialen Kanäle des Rades (1) an der Außenseite des Rades von einem abnehmbaren Radteil (28) und an der Innenseite des Rades von einer Metallplatte (32) gebildet werden, die der Radscheibe (D) zugeordnet und auf dieser unabnehmbar eingespannt ist.

9. Vorrichtung gemäß Anspruch 8, **dadurch gekennzeichnet, dass** der Radteil (28) linsenförmig ausgebildet ist und im Bereich des zentralen Einlasses (3) Vorderkanten (29) für den Satz von Flügeln (2) besitzt, wobei die Vorderkanten Profile besitzen, die zu einer Mittelebene symmetrisch sind, und wobei der Radteil (28) eine zentrale Nabenkappe (30) trägt, die mit den Vorderkanten gemeinsam aufgebaut ist, wobei der Radteil auf der Radscheibe (D) mit Schrauben (31) eingespannt wird, mit denen das Rad an der Nabe befestigt ist.

## Revendications

1. Dispositif destiné à réduire la traînée dans les véhicules, comprenant un dispositif de ventilation (2) associé à chaque roue (1) du véhicule pour la création de courants d'air auxiliaires respectifs et un dispositif directeur associé au boîtier de roue (5) et destiné à diriger les courants d'air auxiliaires, à l'aide d'un collecteur ayant une sortie, si bien qu'ils passent le long de la partie inférieure du véhicule, **caractérisé en ce qu'**il comporte en outre, en association avec chaque roue (1), un écran fixe (20) maintenu sur les organes de suspension (21) et placé à la face interne de la roue dont il protège toute la partie inférieure placée sous le moyeu (22), à l'exclusion du pneumatique, afin que le courant d'air auxiliaire soit dirigé vers le dispositif directeur (6, 7 et 8) associé au boîtier de roue (5), et que l'ensemble du courant doive circuler sur les organes de freinage (23-24) associés à la roue (1), et destiné à agir comme carénage pour la partie inférieure de la roue.

2. Dispositif selon la revendication 1, **caractérisé en ce que** l'écran fixe (20) a un profil pratiquement semi-lenticulaire.

3. Dispositif selon les revendications 1 et 2, **caractérisé en ce que** l'écran fixe (20) recouvre et protège les organes de freinage (23-24) associés à la roue (1).

4. Dispositif selon la revendication 1, **caractérisé en ce que** les boîtiers (5) de roues arrière sont partiellement fermés à leur face externe par un écran (5') qui recouvre pratiquement la partie supérieure de la roue.

5. Dispositif selon la revendication 1, **caractérisé en ce que** le dispositif de ventilation (2) associé à chaque roue (1) est sous forme de canaux radiaux ayant des sections pratiquement analogues à un motif en forme de grecque, formé dans le disque de roue (D) par emboutissage et constitué par des nervures trapézoïdales en saillie (25') d'amplitude angulaire prédéterminée, espacées par des parties de disque (25") d'amplitude angulaire égale.

6. Dispositif selon les revendications 1 et 5, **caractérisé en ce que** les nervures en saillie (25') ont des ouvertures (26) pour le passage d'air dans la région de leur base près du moyeu et aboutissent à l'extrémité opposée à des parties courbes supérieures respectives (27) utilisées pour le raccordement du disque de roue (D) à la jante (CE) par soudage (S).

7. Dispositif selon les revendications 1, 5 et 6, **caractérisé en ce que** les parties de disque (25") d'espacement des nervures en saillie (25') ont des ouvertures (26') pour le passage d'air aux extrémités opposées du moyeu, et **en ce que** la jante (CE) possède, dans la région des ouvertures, un profil de raccordement (PR) destiné à favoriser l'étalement du courant auxiliaire au côté interne de la roue.

8. Dispositif selon les revendications 1, 5, 6 et 7, **caractérisé en ce que** les canaux radiaux de la roue (1) sont délimités, à la face externe de la roue, par un enjoliveur amovible (28) de roue et, à la face interne de la roue, par une plaque métallique (32) associée au disque de roue (D) et retenue sur celui-ci de façon non amovible.

9. Dispositif selon la revendication 8, **caractérisé en ce que** l'enjoliveur de roue (28) a une forme lenticulaire et, dans la région d'admission centrale (3), possède des bords d'attaque (29) de l'ensemble des ailettes (2), les bords d'attaque ayant des profils symétriques par rapport au plan médian et l'enjoliveur de roue (28) portant un capuchon central de moyeu (30) solidaire des bords d'attaque, l'enjoliveur de roue étant retenu sur le disque de roue (D) par les boulons (31) qui fixent la roue au moyeu.
